# EUROPÄISCHE PATENTSCHRIFT

(11) **EP 2 831 159 B1**
(45) Veröffentlichungstag und Bekanntmachung des Hinweises auf die Patenterteilung: **09.03.2016**
(21) Anmeldenummer: 13709204.5
(22) Anmeldetag: 14.03.2013
(51) Int. Cl.: C08K 3/16

(54) **THERMOPLASTISCHE FORMMASSEN MIT ERHÖHTER HYDROLYSE-BESTÄNDIGKEIT**
THERMOPLASTIC MOULDED SUBSTANCES WITH INCREASED HYDROLYSIS RESISTANCE
MASSES DE FORMAGE THERMOPLASTIQUES DOTÉES D'UNE RÉSISTANCE À L'HYDROLYSE AMÉLIORÉE

(30) Priorität: 26.03.2012 EP 12161198
(43) Veröffentlichungstag der Anmeldung: 04.02.2015
(73) Patentinhaber: Lanxess Deutschland GmbH, 51369 Leverkusen (DE)
(72) Erfinder: MARGRAF, Günter, 41539 Dormagen (DE); JOACHIMI, Detlev, 47800 Krefeld (DE)
(86) Internationale Anmeldenummer: PCT/EP2013/055195
(87) Internationale Veröffentlichungsnummer: WO 2013/143858

(56) Entgegenhaltungen:
- WO-A1-2008/022910

## Beschreibung

Diese Erfindung betrifft thermoplastische Formmassen, enthaltend A) Polyamid und/oder Copolyamid, B) Füll- und/oder Verstärkungsstoffe, C) Kupferiodid/Kaliumbromid-Gemisch, D) Montanwachs, und gegebenenfalls noch sonstige Additive E). Die Erfindung betrifft darüber hinaus Formkörper oder Halbzeuge, die aus den erfmdungsgemäßen Formmassen, bevorzugt mittels Spritzgießen, hergestellt werden.

Glasfaserverstärkte PA 66- (Polyamid 66-) Compounds haben sich im Automobilbau unter anderem für die Herstellung von Bauteilen für Kraftfahrzeug-Kühlkreisläufe etabliert. Bauteile für Kraftfahrzeug-Kühlkreisläufe im Sinne der vorliegenden Erfindung sind unter anderem Kühlwasserverteiler, Kühlerwasserkästen, Kühlwasserausgleichsbehälter, Thermostatgehäuse, Kühlwasserrohre, Wärmetauschergehäuse und Kühlsystem-Verbindungsstutzen.

Im Kraftfahrzeugbereich verwendet man im Kühlkreislauf eine Mischung aus Ethylenglykol und Wasser, bevorzugt im Verhältnis 1:1, als Kühlmittel. Dazu kommen üblicherweise noch geringe Mengen an Stabilisatoren, vor allem in sogenannten "Longlife coolants". Die Mischung aus Ethylenglykol und Wasser beginnt unter Normaldruck bei 108 °C zu sieden, wobei zuerst das Wasser abdestilliert und als Folge dessen der Ethylenglykol-Anteil allmählich zunimmt. Ab 160 °C löst sich PA 66 in Ethylenglykol auf. Aber auch gewöhnliche 1:1-Mischungen aus Ethylenglykol und Wasser greifen schon bei Temperaturen oberhalb 100 °C glasfaserverstärkte Polyamide an. Das Wasser/Ethylenglykol-Gemisch weicht den Kunststoff auf und baut zudem die Polymermatrix aktiv ab. Ursache hierfür sind chemische Reaktionen unter Beteiligung des Ethylenglykols und des Wassers, die sowohl das Polyamid selbst, als auch die Anbindung zwischen den Glasfasern und der Polymermatrix beeinträchtigen. Bei niedrigen Temperaturen ist diese sogenannte Hydrolyse/Glykolyse vergleichsweise langsam, höhere Temperaturen beschleunigen sie.

Die Bestimmung der Beständigkeit gegenüber Gemischen aus Wasser und Ethylenglykol von Polyamidformmassen (sogenannte Hydrolyse-/ bzw. Glykolysebeständigkeit) erfolgt häufig an Hand von Normprüfstäben, die im Wasser/Ethylenglykol-Gemisch bei 120-135 °C in druckfesten Stahlbehältern für 7, 21 und 42 Tagen eingelagert werden. Im Anschluss an die Lagerung werden mechanische Ausprüfungen an den Normprüfstäben, bevorzugt Zugversuche, Biegeversuche oder die Bestimmung der Schlagzähigkeit vorgenommen und die erhaltenen Eigenschaften mit denen spritzfrischer, nicht im Wasser/Ethylenglykol-Gemisch gelagerter Normprüfstäbe verglichen. Weiterhin werden die Probekörper auf Rissbildung hin untersucht. Je geringer der Abfall der betrachteten Eigenschaft vom spritzfrischen Zustand zum gelagerten Zustand nach 21 bzw. 42 Tagen ist, desto höher ist die Hydrolyse-/ bzw. Glykolysebeständigkeit der betrachteten Polyamidformmasse.

Zur Bestimmung der Hydolyse-/ bzw. Glykolysebeständigkeit an Bauteilen für Kraftfahrzeug-Kühlkreisläufe werden die zu untersuchenden Bauteile in reinem Ethylenglykol bei 120-135 °C bzw. in Wasser/Ethylenglykol-Gemisch bei 120-135 °C eingelagert bzw. durchströmt. Nach Abschluss der Lagerung werden Berstdrücke der Bauteile bestimmt und optische Untersuchungen hinsichtlich Rissbildung durchgerührt. Je geringer der Abfall des Berstdruckes vom spritzfrischen Zustand zum gelagerten Zustand ist, desto höher ist die Hydolyse-/ bzw. Glykolysebeständigkeit des betrachteten Bauteiles.

Aufgrund der Leistungssteigerung der Fahrzeugtriebwerke, die zu höheren Motortemperaturen und damit auch zu höheren Temperaturen im Kühlsystem führten, erhöht sich die Belastung Kühlwasserführender Bauteile und führt zu höheren Anforderungen hinsichtlich zu deren Herstellung einzusetzender Polyamidformmassen. Diese deutlich gestiegenen Anforderungen können teilweise mit teilkristallinen, aliphatischen Polyamiden nicht verfüllt werden.

In diesem Fall können teilkristalline, teilaromatische Polyphthalamide verwendet werden, die die Eigenschaftslücke zwischen technischen Thermoplasten und Hochleistungskunststoffen füllen. Sie zeichnen sich durch eine geringere und langsamere Feuchteaufnahme, bessere chemische Beständigkeit und höhere Dauergebrauchstemperaturen im Vergleich zu teilkristallinen, aliphatischen Polyamiden wie Polyamid 6 und Polyamid 66 aus (Hellerich, Harsch, Haenle, "Werkstoff-Führer Kunststoffe", Carl Hanser Verlag, München, Wien, 2004, 9. Auflage, Seiten 159 bis 161).

Nachteilig wirken sich bei der Verwendung teilkristalliner, teilaromatischer Polyphthalamide der höhere Preis, die höhere Dichte und die deutlich höhere Schmelzeviskosität im Vergleich zu Polyamid 6 und Polyamid 66 aus. Darüber hinaus führt der signifikant erhöhte Schmelzpunkt zu einer weniger wirtschaftlichen Spritzgußverarbeitung (Kunststoff-Handbuch 3/4, Polyamide, Carl Hanser Verlag, München 1998, Seite 803-809).

WO 2008/022910 A1 beschreibt thermoplastische Formmassen mit verbesserter Hydrolysebeständigkeit, enthaltend 20 - 85 Gew.-% mindestens eines Polyamids mit einer Zahl an Aminoendgruppen von **≥** 50 mmol/kg, 14,9 - 60 Gew.-% Glasfasern, 0,01 - 2 Gew.-% mindestens eines Wärmestabilisators, 0 - 1,5 Gew.-% mindestens eines Entformungshilfsmittels und 0 - 30 Gew.-% weiterer Zusatzstoffe, wobei die Summe der Gewichtsprozente 100 beträgt. Das erfindungsgemäße Beispiel aus WO 2008/022910 A1 enthält 0,3% Calciumstearat als Entformungsmittel und 0,3% einer Cul/KI-Mischung im Molverhältnis 1:4 als Wärmestabilisator. Aufgabe der vorliegenden Erfindung ist es, glasfaserverstärkte thermoplastische Formmassen bereitzustellen, die sich durch eine verbesserte Hydrolysebeständigkeit gegenüber Gemischen aus Wasser und Kühlmitteln, insbesondere Kühlmitteln auf Basis von Ethylenglykol, auszeichnen. Dies soll insbesondere ohne den Einsatz hydrophober Comonomere oder Copolymere geschehen. Eine weitere Aufgabe der vorliegenden Erfindung ist es, hydrolysestabile Bauteile bereitzustellen, die aus den erfindungsgemäßen thermoplastischen Formmassen erhältlich sind.

Lösung der Aufgabe und somit Gegenstand der vorliegenden Erfindung ist ein Stoffgemisch, auch als thermoplastische Formmasse bezeichnet, enthaltend
A) 20 bis 85 Gewichtsteile mindestens eines Polyamids mit einer Zahl an Aminoendgruppen von **≥** 50 mmol/kg,
B) 14,98 bis 60 Gewichtsteile wenigstens eines Füll- und Verstärkungsstoffes,
C) 0,01 bis 2 Gewichtsteile Kupferiodid/Kaliumbromid-Gemisch, und
D) 0,01 bis 1,5 Gewichtsteile Montanwachs,
wobei die Summe der Gewichtsteile 100 ergibt und wobei die beiden Komponenten des Stabilisatorgemisches Kupferiodid/Kaliumbromid in einer solchen Menge vorliegen, dass die in der Formmasse enthaltene molare Menge an Bromid größer oder gleich der sechsfachen molaren Menge und kleiner oder gleich der fünfzehnfachen molaren Menge des in der Formmasse enthaltenen Kupfers ist.

In einer bevorzugten Ausführungsform enthält das erfindungsgemäße Stoffgemisch zusätzlich zu den Komponenten A), B), C) und D) noch E) 0,05 bis 5 Gewichtsteile wenigstens eines sonstigen Additivs, das sich in jedem Fall von den Komponenten A), B), C) und D) unterscheidet und wobei die Gewichtsteile der Komponenten A) bis D) so reduziert werden, dass die Summe aller Gewichtsteile stets 100 ergibt.

Überraschenderweise zeigen Bauteile die man aus dem erfindungsgemäßen Stoffgemisch herstellt eine gegenüber dem Stand der Technik deutlich verbesserte Hydrolysestabilität sowie Glykolysestabilität, bevorzugt wenn es sich um Bauteile im Kühlkreislauf eines Kraftfahrzeugs handelt und insbesondere wenn die Bauteile einem Wasser und/oder Glykolmedium bei Temperaturen von mehr als 120 °C ausgesetzt sind.

Die Erfindung betrifft aber auch die Verwendung dieses erfindungsgemäßen Stoffgemisches aus
A) 20 bis 85 Gewichtsteilen mindestens eines Polyamids mit einer Zahl an Aminoendgruppen von **≥** 50 mmol/kg,
B) 14,98 bis 60 Gewichtsteilen wenigstens eines Füll- und Verstärkungsstoffes,
C) 0,01 bis 2 Gewichtsteilen Kupferiodid/Kaliumbromid-Gemisch, und
D) 0,01 bis 1,5 Gewichtsteilen Montanwachs,
wobei die Summe der Gewichtsteile 100 ergibt und wobei die beiden Komponenten des Stabilisatorgemisches Kupferiodid/Kaliumbromid in einer solchen Menge vorliegen, dass die in der Formmasse enthaltene molare Menge an Bromid größer oder gleich der sechsfachen molaren Menge und kleiner oder gleich der fünfzehnfachen molaren Menge des in der Formmasse enthaltenen Kupfers ist, zur Herstellung Polyamid-basierter Bauteile, bevorzugt von Polyamid-basierten Bauteilen für Kühlkreisläufe, besonders bevorzugt von Polyamid-basierten Bauteilen im Kraftfahrzeug-Kühlkreislauf, insbesondere bevorzugt von Kühlerwasserverteilern, Kühlerwasserkästen, Kühlerausgleichsbehältern, Thermostatgehäusen, Kühlwasserrohren, Wärmetauschergehäusen oder Kühlsystem-Verbindungsstutzen.

Die vorliegende Erfindung betrifft ferner ein Verfahren zur Verhinderung der Hydrolyse und/oder Glykolyse von Bauteilen im Kraftfahrzeug-Kühlkreislauf, dadurch gekennzeichnet, dass die zur Herstellung dieser Komponenten einzusetzenden Polyamide in Form eines erfindungsgemäßen Stoffgemisches eingesetzt werden.

Die vorliegende Erfindung betrifft zudem die Verwendung von Stoffgemischen aus
A) 20 bis 85 Gewichtsteilen mindestens eines Polyamids mit einer Zahl an Aminoendgruppen von **≥** 50 mmol/kg,
B) 14,98 bis 60 Gewichtsteilen wenigstens eines Füll- und Verstärkungsstoffes,
C) 0,01 bis 2 Gewichtsteilen Kupferiodid/Kaliumbromid-Gemisch, und
D) 0,01 bis 1,5 Gewichtsteilen Montanwachs,
wobei die Summe der Gewichtsteile 100 ergibt und wobei die beiden Komponenten des Stabilisatorgemisches Kupferiodid/Kaliumbromid in einer solchen Menge vorliegen, dass die in der Formmasse enthaltene molare Menge an Bromid größer oder gleich der sechsfachen molaren Menge und kleiner oder gleich der fünfzehnfachen molaren Menge des in der Formmasse enthaltenen Kupfers ist, zur Verhinderung der Hydrolyse und/oder Glykolyse in Polyamid-basierten Bauteilen, bevorzugt von Polyamid-basierten Bauteilen in Kühlkreisläufen, insbesondere bevorzugt in Polyamid-basierten Bauteilen im Kraftfahrzeug-Kühlkreislauf.

Die vorliegende Erfindung betrifft aber auch ein Verfahren zur Verhinderung der Hydrolyse und/oder Glykolyse Polyamid-basierter Bauteile, bevorzugt Polyamid-basierter Bauteile für Kühlkreisläufe, besonders bevorzugt für Kraftfahrzeug- Kühlkreisläufe, dadurch gekennzeichnet, dass zu deren Herstellung ein Stoffgemisch aus
A) 20 bis 85 Gewichtsteilen mindestens eines Polyamids mit einer Zahl an Aminoendgruppen von **≥** 50 mmol/kg,
B) 14,98 bis 60 Gewichtsteilen wenigstens eines Füll- und Verstärkungsstoffes,
C) 0,01 bis 2 Gewichtsteilen Kupferiodid/Kaliumbromid-Gemisch, und
D) 0,01 bis 1,5 Gewichtsteilen Montanwachs,
wobei die Summe der Gewichtsteile 100 ergibt und wobei die beiden Komponenten des Stabilisatorgemisches Kupferiodid/Kaliumbromid in einer solchen Menge vorliegen, dass die in der Formmasse enthaltene molare Menge an Bromid größer oder gleich der sechsfachen molaren Menge und kleiner oder gleich der fünfzehnfachen molaren Menge des in der Formmasse enthaltenen Kupfers ist, eingesetzt wird.

Zur Herstellung der im erfindungsgemäßen Stoffgemisch vorliegenden Komponente A), Polyamide, sind eine Vielzahl von Verfahrensweisen bekannt, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung der im Stoffgemisch als Komponente A) einzusetzenden Polyamide verlaufen bevorzugt über die Polykondensation in der Schmelze. Erfindungsgemäß wird hierunter auch die hydrolytische Polymerisation von Lactamen als Polykondensation verstanden.

Als Komponente (A) enthalten die erfindungsgemäßen thermoplastischen Formmassen 20 bis 85 Gewichtsteile, bevorzugt 40 bis 75 Gewichtsteile mindestens eines Polyamides. Das Polyamid weist eine Zahl der primären Aminoendgruppen von ≥ 50 mmol/kg, bevorzugt **≥** 60 mmol/kg auf. Die Anzahl der primären Aminoendgruppen der erfindungsgemäß einsetzbaren Polyamide kann bei ihrer Herstellung durch ein passendes Verhältnis von in den Monomeren vorliegenden Amino- zu Carbonsäureendgruppen eingestellt werden. Das Vorliegen dieser speziellen Zahl an primären Aminoendgruppen trägt dazu bei, die Wärme- und/oder die Hydrolysestabilität der erfindungsgemäßen thermoplastischen Formmassen zu erhöhen. Die Bestimmung der Aminoendgruppen kann man beispielsweise mittels Titration einer Lösung des Polyamids in Gegenwart eines Indikators durchführen. Dazu wird das Polyamid in einem Gemisch aus Phenol und Methanol, bevorzugt 75 Gew.-% Phenol und 25 Gew.-% Methanol, unter Erwärmen gelöst. Beispielsweise kann man die Mischung unter Rückfluss am Siedepunkt halten, bis das Polymer gelöst ist. Die abgekühlte Lösung wird mit einem geeigneten Indikator bzw. einer Indikatormischung, bevorzugt einer methanolischen Lösung aus Benzylorange und Methylenblau, versetzt und mit einer methanolhaltigen Perchlorsäurelösung in Glycol bis zum Farbumschlag titriert. Aus dem Perchlorsäureverbrauch wird die Aminoendgruppenkonzentration berechnet.

Alternativ kann man die Titration ohne Indikator auch potentiometrisch mit einer Perchlorsäurelösung in Ethylenglycol durchführen, wie in der WO 02/26865 A1 auf Seite 11 beschrieben. Die Bestimmung der Carboxylendgruppen kann man z.B. ebenfalls durch Titration einer Lösung des Polyamids unter Verwendung eines Indikators vornehmen. Dazu wird das Polyamid in Benzylalkohol (Phenylmethanol) unter Erwärmen, z.B. bis zum Sieden, gelöst, wobei man ein Steigrohr aufsetzt und Stickstoffgas einleitet. Die noch heiße Lösung wird mit einem geeigneten Indikator, bevorzugt mit einer propanolischen Lösung von Kresolrot, versetzt und sofort mit einer alkoholischen Kaliumhydroxidlösung, bevorzugt KOH gelöst in einer Mischung aus Methanol, 1-Propanol und 1-Hexanol, bis zum Farbumschlag titriert. Aus dem KOH-Verbrauch wird die Carboxylendgruppenkonzentration berechnet. Alternativ kann man die Titration ohne Indikator auch konduktometrisch mit einer NaOH-Lösung in Benzylalkohol durchführen, wie in der WO 02/26865 A1 auf Seite 11 - 12 beschrieben. In einer weiteren bevorzugten Ausführungsform weist das Polyamid einen molaren Anteil an Polymerketten von **≥** 30 mol-% auf, die mit einem Diamin geregelt sind, bevorzugt einen molaren Anteil an mit einem Diamin geregelten Polymerketten von **≥** 40 mol-%, besonders bevorzugt einen molaren Anteil an mit einem Diamin geregelten Polymerketten von ≥ 50 mol-%. Die Arbeiten im Rahmen der vorliegenden Erfindung zeigten, dass das Vorliegen von wenigstens 30 mol-% an Polymerketten, die mit einem Diamin geregelt sind, mit dazu beiträgt, die Stabilität gegen thermooxidativen Abbau und die Hydrolysebeständigkeit signifikant zu erhöhen. In einer bevorzugten Ausführungsform wird das Diamin zu Beginn der Polymerisation zu der Monomermischung hinzu gegeben. In einer weiteren bevorzugten Ausführungsform wird das Diamin bei der Herstellung des Polyamids nachträglich zu der Polymerschmelze dosiert. In einer weiteren bevorzugten Ausführungsform weist das Polyamid eine Viskositätszahl von 100 bis 250 ml/g, bevorzugt 120 bis 200 ml/g, besonders bevorzugt 140 bis 170 ml/g auf. Die Viskositätszahl der erfindungsgemäßen Polyamide trägt ebenfalls dazu bei, die Wärmestabilität und/oder die Hydrolysebeständigkeit der thermoplastischen Formmassen zu erhöhen. Die Viskositätszahl VZ wird gemessen an einer Lösung von Polyamid in 96 %iger Schwefelsäure der Konzentration c = 5 g/l, entsprechend der ISO307. Geeignete Polyamide sind z.B. in den US-Patentschriften 2,071,250, 2,071,251, 2,130,523, 2,130,948, 2,241,322, 2,312,966, 2,512,606 und 3,393,210 beschrieben. Es können aliphatische, teilaromatische oder aromatische Polyamide eingesetzt werden, wobei aliphatische Polyamide bevorzugt sind. Der Begriff "aliphatische Polyamide" bedeutet, dass die Polyamide ausschließlich aus aliphatischen Monomeren aufgebaut sind. Der Begriff "teilaromatische Polyamide" bedeutet, dass die Polyamide sowohl aus aliphatischen, als auch aus aromatischen Monomeren aufgebaut sind. Der Begriff "aromatische Polyamide" bedeutet, dass die Polyamide ausschließlich aus aromatischen Monomeren aufgebaut sind.

Bevorzugt können geeignete Polyamide durch Kondensation entsprechender Mengen einer gesättigten oder einer aromatischen Dicarbonsäure mit 4 bis 12 Kohlenstoffatomen, mit einem gesättigten oder aromatischen Diamin, welches 2 bis 14 Kohlenstoffatome aufweist, oder durch Kondensation von Aminocarbonsäuren bzw. Polyaddition von entsprechenden Lactamen mit 3 bis 12 Kohlenstoffatomen hergestellt werden. Es ist auch möglich Polyamide zu verwenden, die durch Copolykondensation von zwei oder mehr der oben genannten Monomeren hergestellt worden sind, bevorzugt Copolymere aus Adipinsäure, Isophthalsäure oder Terephthalsäure und Hexamethylendiamin oder Copolymere aus Caprolactam, Terephthalsäure und Hexamethylendiamin. Derartige teilaromatische Copolyamide enthalten 40 bis 90 Gew.-% Einheiten, die sich von Terephthalsäure und Hexamethylendiamin ableiten. Ein geringer Anteil der Terephthalsäure, vorzugsweise nicht mehr als 10 Gew.-% der gesamten eingesetzten aromatischen Dicarbonsäuren, kann durch Isophthalsäure oder andere aromatische Dicarbonsäuren, vorzugsweise solche, in denen die Carboxylgruppen in para-Stellung stehen, ersetzt werden.

Als Monomere kommen auch cyclische Diamine in Frage. Besonders bevorzugte Diamine sind Bis-(4-aminocyclohexyl)-methan, Bis-(4-amino-3-methylcyclohexyl)-methan, Bis-(4-aminocyclohexyl)-2,2-propan oder Bis-(4-amino-3-methylcyclohexyl)-2,2-propan. Als weitere Diamine sind 1,3- oder 1,4-Cyclohexandiamin oder Isophorondiamin genannt.

Neben den Einheiten, die sich von Terephthalsäure und Hexamethylendiamin ableiten, enthalten die teilaromatischen Copolyamide Einheiten, die sich von ε-Caprolactam ableiten und/oder Einheiten, die sich von Adipinsäure und Hexamethylendiamin ableiten. Der Anteil an Einheiten, die sich von ε-Caprolactam ableiten, kann bis zu 50 Gew.-%, vorzugsweise 20 bis 50 Gew.-%, insbesondere 25 bis 40 Gew.-% betragen, während der Anteil an Einheiten, die sich von Adipinsäure und Hexamethylendiamin ableiten, bis zu 60 Gew.-%, vorzugsweise 30 bis 60 Gew.-% und insbesondere 35 bis 55 Gew.-% betragen kann. Die Copolyamide können sowohl Einheiten von ε-Caprolactam als auch Einheiten von Adipinsäure und Hexamethylendiamin enthalten, in diesem Fall ist darauf zu achten, dass der Anteil an Einheiten, die frei von aromatischen Gruppen sind, mindestens 10 Gew.-% beträgt, vorzugsweise mindestens 20 Gew.-%. Das Verhältnis der Einheiten, die sich von ε-Caprolactam und von Adipinsäure und Hexamethylendiamin ableiten, unterliegt dabei keiner besonderen Beschränkung. Die Herstellung der teilaromatischen Copolyamide kann z.B. nach dem in den EP-A-0 129 195 und EP-A-0129 196 beschriebenen Verfahren erfolgen. Weitere geeignete Copolyamide sind im wesentlichen aufgebaut aus 30 bis 44 mol-%, vorzugsweise 32 bis 40 mol-% und insbesondere 32 bis 38 mol-% Einheiten, welche sich von Terephthalsäure ableiten, 6 bis 20 mol-%, vorzugsweise 10 bis 18 mol-% und insbesondere 12 bis 18 mol-% Einheiten, welche sich von Isophthalsäure ableiten, 43 bis 49,5 mol-%, vorzugsweise 46 bis 48,5 mol-% und insbesondere 46,3 bis 48,2 mol-% Einheiten, welche sich von Hexamethylendiamin ableiten, 0,5 bis 7 mol-%, vorzugsweise 1,5 bis 4 mol-% und insbesondere 1,8 bis 3,7 mol-% Einheiten, welche sich von aliphatischen cyclischen Diaminen mit 6 bis 30, vorzugsweise 13 bis 29 und insbesondere 13 bis 17 C-Atomen ableiten, sowie 0 bis 4 mol-% weiterer, von den vorgenannten Monomeren verschiedener polyamidbildende Monomere, wobei die Molprozente der Komponenten zusammen 100 mol-% ergeben.

Als weitere polyamidbildende Monomere können aromatische Dicarbonsäuren, beispielsweise substituierte Terephthal- und Isophthalsäuren wie 3-t-Butylisophthalsäure, mehrkernige Dicarbonsäuren, bevorzugt. 4,4'- und 3,3'-Diphenyldicarbonsäure, 4,4'- und 3,3'-Diphenylmethandicarbonsäure, 4,4'- und 3,3'- Diphenylsulfondicarbonsäure, 1,4- oder 2,6-Naphthalindicarbonsäure und Phenoxyterephthalsäure, eingesetzt werden.

Weitere polyamidbildende Monomere können sich bevorzugt von Dicarbonsäuren mit 4 bis 16 Kohlenstoffatomen und aliphatischen Diaminen mit 4 bis 16 Kohlenstoffatomen sowie von Aminocarbonsäuren bzw. entsprechenden Lactamen mit 7 bis 12 Kohlenstoffatomen ableiten. Als geeignete Monomere dieser Typen seien insbesondere Suberinsäure, Azelainsäure oder Sebacinsäure, als Vertreter der aliphatischen Dicarbonsäuren, 1,4-Butandiamin, 1,5-Pentandiamin (EP 2 057 223 B1) oder Piperazin, als Vertreter der Diamine und Caprolactam, Capryllactam, Önanthlactam, Laurinlactam und a-Aminoundecansäure als Vertreter von Lactamen bzw. Aminocarbonsäuren genannt.

"Ableitbar von" oder "ableiten von" bedeuten im Rahmen der vorliegenden Erfindung, dass die genannten Monomere selbst, oder Monomere, die sich aus den genannten Monomeren durch Hinzufügen gleicher oder verschiedener, aliphatischer oder aromatischer Kohlenwasserstoffreste ergeben, eingesetzt werden. Die Schmelzpunkte dieser Copolyamide liegen in der Regel im Bereich von 290 bis 340°C, bevorzugt von 292 bis 330°C, wobei dieser Schmelzpunkt mit einer hohen Glasübergangstemperatur von in der Regel > 100°C, insbesondere > 120°C, jeweils im trockenen Zustand verbunden ist.

Selbstverständlich können auch Mischungen dieser Copolyamide eingesetzt werden, wobei das Mischungsverhältnis beliebig ist. Geeignete Verfahren zur Herstellung der Copolyamide sind dem Fachmann bekannt, siehe auch EP-A-0 702 058.

Bevorzugt wird in den erfindungsgemäßen thermoplastischen Formmassen mindestens ein lineares, aliphatisches Polyamid eingesetzt. Diese Polyamide weisen in einer bevorzugten Ausführungsform einen Schmelzpunkt über 200°C auf. Besonders bevorzugt werden in den thermoplastischen Formmassen Polyamide eingesetzt ausgewählt aus der Gruppe bestehend aus Polyhexamethylenadipinsäureamid (Nylon 66, Polyamid 66), einer Mischung von Polyamiden mit einem Polyamid 66-Anteil von wenigstens 80 Gew.-% oder einem Copolyamid, dessen Bausteine zu wenigstens 80 Gew.-% von Adipinsäure und Hexamethylendiamin ableitbar sind, Polyhexamethylenazelainsäureamid (Nylon 69, Polyamid 69), Polyhexamethylensebacinsäureamid (Nylon 610, Polyamid 610), Polyhexamethylendodecandisäureamid (Nylon 612, Polyamid 612), die durch Ringöffnung von Lactamen erhaltenen Polyamide wie Polycaprolactam (Nylon 6, Polyamid 6), Polylaurinsäurelactam, Poly-11-aminoundecansäure und ein Polyamid aus Di(p-aminocyclohexyl)-methan und Dodecandisäure, Polyamide, die z.B. durch Kondensation von 1,4-Diaminobutan mit Adipinsäure unter erhöhter Temperatur erhältlich sind (Nylon 46, Polyamid 46) und Mischungen davon.

Herstellungsverfahren für Polyamide dieser Struktur sind z. B. in den EP-A-0038 094, EP A-0 038 582 und EP-A-0 039 524 beschrieben. Polycaprolactam (Nylon 6, Polyamid 6) kann auch erhalten werden durch eine Polykondensationsreaktion von 6-Amino-hexansäure. Ganz besonders bevorzugt sind in den erfindungsgemäßen thermoplastischen Formmassen Polyamide, welche ausgewählt sind aus der Gruppe bestehend aus Polyhexamethylenadipinsäureamid (Nylon 66, Polyamid 66), einer Mischung von Polyamiden mit einem Polyamid 66-Anteil von wenigstens 80 Gew.-% oder einem Copolyamid, dessen Bausteine zu wenigstens 80 Gew.-% von Adipinsäure und Hexamethylendiamin ableitbar sind, Polycaprolactam (Nylon 6, Polyamid 6) oder deren Mischungen.

Das erfindungsgemäß einzusetzende Stoffgemisch enthält 14,98 bis 60 Gewichtsteile, bevorzugt 20 bis 50 Gewichtsteile, bevorzugt 25 bis 40 Gewichtsteile wenigstens eines Füll- und Verstärkungsstoffs B).

Als Füllstoff oder Verstärkungsstoff können somit auch Mischungen aus zwei oder mehr unterschiedlichen Füllstoffen und/oder Verstärkungsstoffen eingesetzt werden. Bevorzugt werden Füllstoffe und/oder Verstärkungsstoffe der Reihe Talk, Glimmer, Silikat, Quarz, Titandioxid, Wollastonit, Kaolin, amorphe Kieselsäuren, Magnesiumcarbonat, Kreide, Feldspat, Bariumsulfat, Glaskugeln und/oder faserförmige Füllstoffe und/oder Verstärkungsstoffe auf der Basis von Kohlenstofffasern und/oder Glasfasern eingesetzt. Besonders bevorzugt werden mineralische teilchenförmige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat, Bariumsulfat und/oder Glasfasern eingesetzt.

Ganz besonders bevorzugt werden mineralische teilchenformige Füllstoffe auf der Basis von Talk, Wollastonit, Kaolin und/oder Glasfasern eingesetzt.

Insbesondere bevorzugt werden ferner nadelförmige mineralische Füllstoffe eingesetzt. Unter nadelförmigen mineralischen Füllstoffen wird erfindungsgemäß ein mineralischer Füllstoff mit stark ausgeprägtem nadelförmigen Charakter verstanden. Insbesondere ganz besonders bevorzugt sind nadelförmige Wollastonite. Bevorzugt weist dieses Mineral ein Länge : Durchmesser - Verhältnis von 2:1 bis 35:1, besonders bevorzugt von 3:1 bis 19:1, insbesondere bevorzugt von 4:1 bis 12:1 auf. Die mittlere Teilchengröße der erfindungsgemäß einzusetzenden nadelförmigen Mineralien liegt bevorzugt bei kleiner 20 µm, besonders bevorzugt bei kleiner 15 µm, insbesondere bevorzugt bei kleiner 10 µm, bestimmt mit einem CILAS GRANULOMETER.

Wie bereits oben beschrieben kann der Füllstoff und/oder Verstärkungsstoff gegebenenfalls oberflächemnodifiziert sein, bevorzugt mit einem Haftvermittler bzw. Haftvermittlersystem, besonders bevorzugt einem Haftvermittler auf Silanbasis. Die Vorbehandlung ist jedoch nicht unbedingt erforderlich. Insbesondere bei Verwendung von Glasfasern können zusätzlich zu Silanen auch Polymerdispersionen, Filmbildner, Verzweiger und/oder Glasfaserverarbeitungshilfsmittel verwendet werden.

Die erfindungsgemäß insbesondere ganz besonders bevorzugt einzusetzenden Glasfasern können entweder eine kreisförmige Querschnittsfläche und einen Filament-Durchmesser von 6 und 18 µm, bevorzugt zwischen 9 und 15 µm, oder eine flache Gestalt und nicht-kreisförmige Querschnittsfläche, deren Hauptquerschnittsachse eine Breite im Bereich von 6 - 40 µm und deren Nebenquerschnittsachse eine Breite im Bereich von 3 - 20 µm besitzt, aufweisen. Die Glasfaser kann ausgewählt sein aus der Gruppe der E-Glasfasern, A-Glasfasern, C-Glasfasern, D-Glasfasern, S-Glasfasern und / oder R-Glasfasern.

Die Glasfasern können als Endlosfasern oder als geschnittene oder gemahlene Glasfasern zugesetzt werden. Bevorzugt sind die Fasern mit einem geeigneten Schlichtesystem, enthaltend u.a. bevorzugt Haftvermittler insbesondere auf Silanbasis ausgerüstet.

Besonders bevorzugt sind Haftvermittler auf Silanbasis der allgemeinen Formel (I)

(X-(CH₂)_{q})ₖ-Si-(O-C_{I}H2_{I+1})₄₋ₖ (I)

worin
- X: für NH₂-, HO- oder 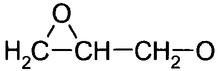 steht,
q für eine ganze Zahl von 2 bis 10, bevorzugt 3 bis 4 steht,
r für eine ganze Zahl von 1 bis 5, bevorzugt 1 bis 2 steht und
k für eine ganze Zahl von 1 bis 3, bevorzugt für 1 steht.

Ganz besonders bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Für die Ausrüstung der Füllstoffe werden bevorzugt Silanverbindungen im Allgemeinen in Mengen von 0,05 bis 2 Gew.-%, vorzugsweise 0,25 bis 1,5 Gew.-% und insbesondere 0,5 bis 1 Gew.-% bezogen auf den mineralischen Füllstoff zur Oberflächenbeschichtung eingesetzt.

Die teilchenförmigen Füllstoffe können bedingt durch die Verarbeitung zur Formmasse bzw. Formkörper in der Formmasse bzw. im Formkörper einen kleineren d97- bzw. d50-Wert aufweisen, als die ursprünglich eingesetzten Füllstoffe. Die Füllstoffe, insbesondere die Glasfasern, können bedingt durch die Verarbeitung zur Formmasse bzw. Formkörper in der Formmasse bzw. im Formkörper kürzere Längenverteilungen als ursprünglich eingesetzt aufweisen.

Als Komponente C) enthalten die erfindungsgemäßen thermoplastischen Formmassen 0,01 bis 2 Gewichtsteile, bevorzugt 0,05 bis 1,5 Gewichtsteile, besonders bevorzugt 0,1 bis 1,5 Gewichtsteile eines Kupferiodid/Kaliumbromid-Gemisches als Stabilisator (Kunststoff-Handbuch 3/4, Polyamide, Carl Hanser Verlag, München 1998, Seite 78).

In diesem Kupferiodid/Kaliumbromid-Gemisch liegen die beiden Komponenten des Stabilisatorgemisches in einer solchen Menge vor, dass die in der Formmasse enthaltene molare Menge an Bromid größer oder gleich der sechsfachen molaren Menge und kleiner oder gleich der fünfzehnfachen, vorzugsweise zwölffachen, molaren Menge des in der Formmasse enthaltenen Kupfers ist.

Das Kupferiodid/Kaliumbromid-Gemisch kann als solches oder in Form von Konzentraten eingesetzt werden. Unter Konzentrat ist dabei ein Polymer, vorzugsweise gleicher chemischer Natur wie Komponente (A), zu verstehen, welches das Kupferiodid/Kaliumbromid-Gemisch in hoher Konzentration enthält. Der Einsatz von Konzentraten ist ein übliches Verfahren und wird besonders häufig dann angewandt, wenn sehr geringe Mengen eines Einsatzstoffes zu dosieren sind. Kupferiodid CuI und Kaliumbromid KBr sind handelsüblich und dem Fachmann bekannt.

Das erfindungsgemäße Stoffgemisch enthält 0,01 bis 1,5 Gewichtsteile, bevorzugt 0,05 bis 1 Gewichtsteile, besonders bevorzugt 0,1 bis 0,5 Gewichtsteile Montanwachs D) als Entformungsmittel. Entformungshilfsmittel werden der Formmasse zugegeben, um das Entformen des hergestellten Produkts, d.h. das Ablösen des Formteils aus der Form, zu erleichtern (Plastics Additives Handbook, 5th Edition, Hanser-Verlag, München, 2001, Seiten 535-541, 546-548). Montanwachse im Sinne der vorliegenden Erfindung sind Ester von geradkettigen, gesättigten Carbonsäuren mit Kettenlängen von 16 bis 36 C-Atomen mit Ethylenglykol, bevorzugt Ester von geradkettigen, gesättigten Carbonsäuren mit Kettenlängen von 22 bis 34 C-Atomen mit Ethylenglykol, besonders bevorzugt Ester von geradkettigen, gesättigten Carbonsäuren mit Kettenlängen von 28 bis 32 C-Atomen mit Ethylenglykol (Ullmann's Encyclopedia of Industrial Chemistry: Waxes, Wiley-VCH Verlag GmbH & Co., KGaA, Weinheim, Seite 20-24, 10.1002/14356007.a28.103). Der Anteil nicht veresterter, geradkettiger, gesättigter Carbonsäuren mit Kettenlängen von 16 bis 36 beträgt dabei kleiner 10 Mol-% am Gesamtanteil der Carbonsäuren.

Montanwachse im Sinne der vorliegenden Erfindung sind kommerziell verfügbar. Insbesondere bevorzugt wird Licowax E der Clariant Produkte Deutschland GmbH eingesetzt, ein oben bezeichneter Ester von geradkettigen, gesättigten Carbonsäuren mit Kettenlängen von 16 bis 36 C-Atomen mit Ethylenglykol , einem Säurewert von 15 - 20 mg KOH/g (ISO 2114), einer Viskosität von ca. 20 mPas (DIN 53019 bei 100 °C), einem Tropfpunkt von 79 - 83 °C (ISO 2176), einer Dichte von ca. 1,02 g/cm³ (ISO 1183) und einem Verseifungswert nach ISO 3681 von 140 - 160 mg KOH/g.

Die erfindungsgemäße Formmasse kann zudem wenigstens ein Additiv E) enthalten, das sich in jedem Fall von den Komponenten A), B), C) oder D) unterscheidet. Bevorzugte Additive E) im Sinne der vorliegenden Erfindung sind Nukleierungsmittel (Plastics Additives Handbook, 5th Edition, Hanser-Verlag, München, 2001, Seiten 949-959, 966), Antistatika (Plastics Additives Handbook, 5th Edition, Hanser-Verlag, München, 2001, Seiten 627-636), Additive zur Erhöhung der elektrischen Leitfähigkeit (Plastics Additives Handbook, 5th Edition, Hanser-Verlag, München, 2001, Seite 630) sowie Farbstoffe und Pigmente (Plastics Additives Handbook, 5th Edition, Hanser-Verlag, München, 2001, Seiten 813-818, 823, 872-874). Die Additive E) können alleine oder in Mischung bzw. in Form von Masterbatchen eingesetzt werden.

Als Nukleierungsmittel werden bevorzugt Natrium- oder Calciumphenylphosphinat, Aluminiumoxid, Siliziumdioxid sowie besonders bevorzugt Talkum eingesetzt.

Als Additive zur Erhöhung der elektrischen Leitfähigkeit werden bevorzugt Leitfähigkeitsruße, Graphit sowie andere übliche, nicht faserige Additive zur Erhöhung der elektrischen Leitfähigkeit zugesetzt. Als nanoskalige Additive werden bevorzugt sogenannte "single wall Kohlenstoff-Nanotubes" oder "multi wall Kohlenstoff-Nanotubes" eingesetzt.

Als Pigmente bzw. Farbstoffe werden bevorzugt Ruß und Nigrosin eingesetzt.

In einer alternativen bevorzugten Ausführungsform enthalten die zur Herstellung erfindungsgemäßer Erzeugnisse, Bauteile oder Formkörper einzusetzenden Formmassen Bestandteile, die in einer oder mehreren Dimensionen kleiner als 100 Nanometer sind, sogenannte Nanomaterialien. Diese können organisch oder anorganisch, natürlich oder synthetisch sein, wobei auch Kombinationen verschiedener Nanomaterialien möglich sind.

Zur Klarstellung sei angemerkt, dass vom Rahmen der Erfindung alle aufgeführten, allgemeinen oder in Vorzugsbereichen genannten Definitionen und Parameter in beliebigen Kombinationen umfasst sind.

Gegenstand der vorliegenden Anmeldung ist auch die Verwendung der erfindungsgemäßen Stoffgemische bzw. Formmassen im Spritzguss, einschließlich der Sonderverfahren GIT (Gasinjektionstechnik), WIT (Wasserinjektionstechnik) und PIT (Projektilinjektionstechnik), im Extrusionsverfahren in der Profil-Extrusion, im Blasformen, besonders bevorzugt Standard-Extrusionsblasformen, 3D-Extrusionsblasformverfahren oder Saugblasformverfahren oder zur Herstellung von Formteilen.

Erfindungsgemäße Verfahren zur Herstellung von Formteilen durch Extrusion oder Spritzguss arbeiten bei Schmelzetemperaturen im Bereich von 230 bis 330°C, bevorzugt von 250 bis 300°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar.

Das Verfahren des Spritzgusses zeichnet sich dadurch aus, dass der Rohstoff, bevorzugt in Granulatform, in einem beheizten zylindrischen Hohlraum aufgeschmolzen (plastifiziert) und als Spritzmasse unter Druck in einem temperierten Hohlraum gespritzt wird. Nach dem Abkühlen (Erstarren) der Masse wird das Spritzgussteil entformt.

### Man unterscheidet

1. Plastifizieren / Aufschmelzen
2. Einspritzphase (Füllvorgang)
3. Nachdruckphase (wegen thermischer Kontraktion bei der Kristallisation)
4. Entformen.

Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte. (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Bauteil gefertigt. Notwendig dazu sind immer zwei Werkzeughälften. Beim Spritzguss unterscheidet man folgende Funktionskomplexe:
- Angusssystem
- Formbildende Einsätze
- Entlüftung
- Maschinen- und Kraftaufnahme
- Entformungssystem und Bewegungsübertragung
- Temperierung

Die Spritzguss-Sonderverfahren GIT (Gasinjektionstechnik), WIT (Wasserinjektionstechnik) und Projektilinjektionstechnik (PIT) sind spezialisierte Spritzgussverfahren zur Herstellung hohler Werkstücke. Ein Unterschied zum Standard-Spritzguss besteht in einem speziellen Arbeitsschritt gegen Ende der Werkzeugfüllphase bzw. nach einer definierter Teilfüllung der Gussform. Im verfahrensspezifischen Arbeitsschritt wird ein Prozessmedium über einen so genannten Injektor in die schmelzeflüssig Seele des Vorspritzlings zur Hohlraumbildung injiziert. Dabei handelt es sich um Gas - in der Regel Stickstoff - im Fall der GIT und Wasser bei der. Im Falle der PIT wird ein Projektil in die schmelzeflüssige Seele eingeschossen und auf diesem Weg ein Hohlraum ausgebildet.

Im Gegensatz zum Spritzguss wird bei der Extrusion ein endlos geformter Kunststoffstrang, hier ein Polyamid, im Extruder eingesetzt, wobei der Extruder eine Maschine zur Herstellung thermoplastischer Formstücke ist. Man unterscheidet

Einschneckenextruder und Doppelschneckenextruder sowie die jeweiligen Untergruppen konventioneller Einschneckenextruder, förderwirksamer Einschneckenextruder,

gegenläufiger Doppelschneckenextruder und gleichläufiger Doppelschneckenextruder.

Profile im Sinne der vorliegenden Erfindung sind (Bau-)Teile, die über ihre gesamte Länge einen identischen Querschnitt aufweisen. Sie können im Profil-Extrusionsverfahren hergestellt werden. Die grundsätzlichen Verfahrensschritte des Profil-Extrusionsverfahrens sind:
1. Plastifizieren und Bereitstellen der thermoplastischen Schmelze in einem Extruder,
2. Extrusion des thermoplastischen Schmelzestrangs durch eine Kalibrierhülse, die den Querschnitt des zu extrudierenden Profils aufweist,
3. Abkühlung des extrudierten Profils in einem Kalibriertisch,
4. Weitertransport des Profils mit einem Abzug hinter dem Kalibriertisch,
5. Ablängen des zuvor endlosen Profils in einer Schneideanlage,
6. Sammeln der abgelängten Profile an einem Sammeltisch.

Eine Beschreibung der Profilextrusion von Polyamid 6 und Polyamid 66 erfolgt in Kunststoff-Handbuch 3/4, Polyamide, Carl Hanser Verlag, München 1998, Seite 374-384.

Blasformverfahren im Sinne der vorliegenden Erfindung sind bevorzugt Standard-Extrusionsblasformen, 3D-Extrusionsblasformen, Saugblasformverfahren und die sequentielle Coextrusion.

Die grundsätzlichen Verfahrensschritte des Standard-Extrusionsblasformens sind gemäß Thielen, Hartwig, Gust, "Blasformen von Kunststoffhohlkörpern", Carl Hanser Verlag, München 2006, Seiten 15 bis 17:
1. Plastifizieren und Bereitstellen der thermoplastischen Schmelze in einem Extruder,
2. Umlenken der Schmelze in eine senkrechte Fließbewegung nach unten und das Ausformen eines schlauchförmigen Schmelze-"Vorformlings",
3. Umschließen des frei unter dem Kopf hängenden Vorformlings durch eine in der Regel aus zwei Halbschalen bestehenden Form, dem Blasformwerkzeug,
4. Einschieben eines Blasdorns oder einer (ggf. mehrer) Blasnadel(n),
5. Aufblasen des plastischen Vorformlings gegen die gekühlte Wand des Blasformwerkzeugs, wo der Kunststoff abkühlt, erhärtet und die endgültige Form des Formteils annimmt,
6. Öffnen der Form und Entformen des blasgeformten Teils,
7. Entfernen der abgequetschten "Butzen"-Abfälle" an beiden Enden des Blasformteils.

Weitere Schritte der Nachbearbeitung können folgen.

Mittels Standard-Extrusionsblasformen lassen sich auch Bauteile mit komplexer Geometrie und mehrachsigen Krümmungen herstellen. Allerdings werden dann Formteile erhalten, die einen großen Anteil von überschüssigem, abgequetschtem Material enthalten und in großen Bereichen eine Schweißnaht aufweisen.

Beim 3D-Extrusionsblasformen, auch als 3D-Blasformen bezeichnet, wird daher zur Vermeidung von Schweißnähten und zur Reduktion des Materialeinsatzes ein in seinem Durchmesser auf den Artikelquerschnitt angepasster Vorformling mit speziellen Vorrichtungen deformiert und manipuliert und dann direkt in die Blasformkavität eingebracht. Die verbleibende Quetschkante wird somit auf ein Minimum an den Artikelenden reduziert (Thielen, Hartwig, Gust, "Blasformen von Kunststoff-hohlkörpern", Carl Hanser Verlag, München 2006, Seite 117-122).

Beim Saugblasformverfahren, auch als Saugblasen bezeichnet, wird der Vorformling direkt aus der Düse des Schlauchkopfes in die geschlossene Blasform gefördert und über einen Luftstrom durch die Blasform hindurch "gesaugt". Nach Austritt des unteren Endes des Vorformlings aus der Blasform wird dieser durch Schließelemente oben und unten abgequetscht, und der Aufblas- und Kühlvorgang schließen sich an (Thielen, Hartwig, Gust, "Blasformen von Kunststoffhohlkörpern", Carl Hanser Verlag, München 2006, Seite 123).

Die vorliegende Erfindung betrifft folglich auch Formteile, Formkörper oder Halbzeuge erhältlich durch Extrusion, Profil-Extrusion, Blasformen, besonders bevorzugt Standard-Extrusionsblasformen, 3D-Extrusionsblasformverfahren, Saugblasformverfahren und Sequentielle Coextrusion oder Spritzguss der erfindungsgemäßen Stoffgemische.

Die vorliegende Erfindung betrifft deshalb auch die Verwendung der erfindungsgemäßen Stoffgemische in Bauteilen, wobei es sich um Formteile, Formkörper oder Halbzeuge handelt, die man mittels Spritzguss, Extrusion, Profil-Extrusion oder Blasformen, insbesondere mittels Spritzguss erhält.

Die vorliegende Erfindung betrifft aber auch die aus den erfindungsgemäßen Stoffgemischen erhältlichen Formteile, Formkörper oder Halbzeuge in der Kraftfahrzeug-, Elektro-, Elektronik-, Telekommunikations-, Computerindustrie, im Sport, in der Medizin, im Haushalt, in der Bau- oder in der Unterhaltungsindustrie.

Die vorliegende Erfindung betrifft aber auch die Verwendung dieser Formteile, Formkörper oder Halbzeuge als luftführende Bauteile, kühlwasserführende Bauteile, ölführende Bauteile, andere Medien führende Rohre und Behälter, Kraftstofftanks oder Öltanks handelt.

Die vorliegende Erfindung betrifft aber auch die Verwendung jener kühlwasserführenden Bauteile im Kraftfahrzeug als Kühlerwasserverteiler, Kühlerwasserkästen, Kühlerausgleichsbehälter, Thermostatgehäuse, Kühlwasserrohre, Wärmetauscher oder Kühlsystem-Verbindungsstutzen.

Zum Nachweis der erfindungemäß beschriebenen Verbesserungen wurden zunächst durch Compoundierung entsprechende Kunststoff-Formmassen angefertigt. Die einzelnen Komponenten wurden in einem Zweiwellenextruder (ZSK 26 Mega Compounder der Fa. Coperion Werner & Pfleiderer, Stuttgart, Deutschland) bei Temperaturen zwischen 280 und 320°C gemischt, als Strang in ein Wasserbad ausgetragen, bis zur Granulierfähigkeit abgekühlt und granuliert.

Von den Formmassen wurden auf einer Spritzgussmaschine Prüfkörper für die mechanischen Prüfungen hergestellt. An den erhaltenen Prüfkörpern wurden folgende Prüfungen durchgeführt: Biegeversuch nach ISO 178, Schlagversuch nach Izod ISO 180 1U.

Zur Beurteilung der Hydrolysebeständigkeit wurde die Veränderung der IZOD-Schlagzähigkeit nach ISO 180 1U, der Biegefestigkeit und der Randfaserdehnung bei Maximalkraft jeweils bei Raumtemperatur bestimmt.

Dazu wurden die Prüfkörper in einem Autoklaven bei 130°C in einem 1:1 (Vol.) Gemisch Ethylenglykol/Wasser für 21 und 42 Tage gelagert. Die Probekörper wurden nach der Lagerung mit demineralisiertem Wasser abgespült, abgetrocknet und anschließend im Biegeversuch nach ISO 178 bzw. im Schlagversuch nach Izod ISO 180 1U ausgeprüft. Zur Bestimmung der Ausgangswerte wurden der Biegeversuch nach ISO 178 und der Schlagversuch nach Izod ISO 180 1U Zustand an spritzfrischen Probekörpern im ungelagerten durchgeführt.

Bei Vergleich 1 handelte es sich um die in der WO2008/022910 A1 als erfindungsgemäß gelehrte Rezeptur.

Prüfkörper des erfindungsgemäßen Beispiels 1 gemäß der vorliegenden Anmeldung zeigten eine deutliche Verbesserung der IZOD-Schlagzähigkeit gemäß ISO 180 1U, der Biegefestigkeit und der Randfaserdehnung nach Autoklaven-Lagerung bei 130°C in einem 1:1 (Vol.) Gemisch Ethylenglykol/Wasser für 21 und 42 Tage gegenüber Vergleich 1.

### Beispiele

**Tabelle 1: Ausführungsbeispiele**

| In der folgenden Tabelle sind die Mengen der Einsatzstoffe in Gew.-Teilen und die erfindungsgemäßen Effekte angegeben. | | | |
|---|---|---|---|
| | | **Vergleich 1** | **Beispiel 1** |
| Polyamid 66 ¹⁾ | [%] | 69,4 | 69,54 |
| Glasfaser ²⁾ | [%] | 30 | 30 |
| Wärmestabilisator: Cul/KI-Mischung (Molverhältnis 1/4) ³⁾ | [%] | 0,3 | |
| Wärmestabilisator: Cul/KBr-Mischung (Molverhältnis 1/4) ³⁾ | [%] | | 0,3 |
| Entformungsmittel Calciumstearat | [%] | 0,3 | |
| Entformungsmittel Montanwachs ⁴⁾ | [%] | | 0,16 |
| Massetemperatur Spritzguß | [°C] | 290 | 290 |
| Werkzeugtemperatur Spritzguß | [°C] | 80 | 80 |
| Schlagzähigkeit Izod ISO 180 1U, spritzfrisch | [kJ/m²] | 58 | 60 |
| Schlagzähigkeit Izod ISO 180 1U, nach 21 d Lagerung | [kJ/m²] | 23 | 36 |
| Schlagzähigkeit Izod ISO 180 1U, nach 42 d Lagerung | [kJ/m²] | 9 | 11 |
| Biegefestigkeit, spritzfrisch | [MPa] | 260 | 259 |
| Biegefestigkeit, nach 21 d Lagerung | [MPa] | 52 | 72 |
| Biegefestigkeit, nach 42 d Lagerung | [MPa] | 19 | 24 |
| Randfaserdehnung, spritzfrisch | [%] | 4,1 | 5,0 |
| Randfaserdehnung, nach 21 d Lagerung | [%] | 2,1 | 3,3 |
| Randfaserdehnung, nach 42 d Lagerung | [%] | 0,9 | 1,3 |

| | | | |
|---|---|---|---|
| ¹⁾ Lineares Polyamid 66 mit einer relativen Lösungsviskosität bei 25°C in einer 1 gew.-%igen Lösung in meta-Kresol von 3,0. Konzentration der Aminoendgruppen: 79 mmol/kg, Konzentration der Carboxylendgruppen 41 mmol/kg, Bestimmung jeweils durch Titration ²⁾ Glasfaser CS 7997 EC10 der Lanxess Deutschland GmbH ³⁾ Wärmestabilisator in Form Polyamid-haltiger Konzentrate, sogenannter Masterbatche, eingesetzt ⁴⁾ Ester der Montansäure mit multifunktionellen Alkoholen, Licowax E der Clariant | | | |

## Patentansprüche

1. Stoffgemisch enthaltend
A) 20 bis 85 Gewichtsteile mindestens eines Polyamids mit einer Zahl an Aminoendgruppen von ≥ 50 mmol/kg,
B) 14,98 bis 60 Gewichtsteile wenigstens eines Füll- und Verstärkungsstoffes,
C) 0,01 bis 2 Gewichtsteile Kupferiodid/Kaliumbromid-Gemisch, und
D) 0,01 bis 1,5 Gewichtsteile Montanwachs,
wobei die Summe der Gewichtsteile 100 ergibt und wobei die beiden Komponenten des Stabilisatorgemisches Kupferiodid/Kaliumbromid in einer solchen Menge vorliegen, dass die in der Formmasse enthaltene molare Menge an Bromid größer oder gleich der sechsfachen molaren Menge und kleiner oder gleich der fünfzehnfachen molaren Menge des in der Formmasse enthaltenen Kupfers ist.

2. Stoffgemisch gemäß Anspruch 1, **dadurch gekennzeichnet, dass** zusätzlich
E) 0,05 bis 5 Gewichtsteile wenigstens eines sonstigen Additivs
eingesetzt wird, wobei die Summe aller Gewichtsteile stets 100 ergibt.

3. Stoffgemisch gemäß der Ansprüche 1 oder 2, **dadurch gekennzeichnet, dass** als Montanwachs ein Ester von geradkettigen, gesättigten Carbonsäuren mit Kettenlängen von 16 bis 36 C-Atomen mit Ethylenglykol eingesetzt wird.

4. Verwendung eines Stoffgemisches gemäß der Ansprüche 1 bis 3 zur Herstellung Polyamid-basierter Bauteile.

5. Verwendung gemäß Anspruch 4, **dadurch gekennzeichnet dass** es sich bei den Bauteilen um Formteile, Formkörper oder Halbzeuge handelt, die man mittels Spritzguss, Extrusion, Profil-Extrusion oder Blasformen erhält.

6. Verwendung gemäß Anspruch 5, **dadurch gekennzeichnet, dass** die Formteile, Formkörper oder Halbzeuge in der Kraftfahrzeug-, Elektro-, Elektronik-, Telekommunikations-, Computerindustrie, im Sport, in der Medizin, im Haushalt, in der Bau- oder in der Unterhaltungsindustrie eingesetzt werden.

7. Verwendung gemäß Anspruch 6, **dadurch gekennzeichnet, dass** es sich bei den Formteilen, Formkörpern oder Halbzeugen in der Kraftfahrzeugindustrie um kühlwasserführende Bauteile handelt.

8. Verwendung gemäß Anspruch 7, **dadurch gekennzeichnet dass** es sich bei den kühlwasserführenden Bauteilen um Kühlerwasserverteiler, Kühlerwasserkästen, Kühlerausgleichsbehälter, Thermostatgehäuse, Kühlwasserrohre, Wärmetauscher oder Kühlsystem-Verbindungsstutzen handelt.

9. Verfahren zur Verhinderung der Hydrolyse und/oder Glykolyse Polyamid-basierter Bauteile, **dadurch gekennzeichnet, dass** zu deren Herstellung ein Stoffgemisch aus
A) 20 bis 85 Gewichtsteilen mindestens eines Polyamids mit einer Zahl an Aminoendgruppen von ≥ 50 mmol/kg,
B) 14,98 bis 60 Gewichtsteilen wenigstens eines Füll- und Verstärkungsstoffes,
C) 0,01 bis 2 Gewichtsteilen Kupferiodid/Kaliumbromid-Gemisch, und
D) 0,01 bis 1,5 Gewichtsteilen Montanwachs,
wobei die Summe der Gewichtsteile 100 ergibt und wobei die beiden Komponenten des Stabilisatorgemisches Kupferiodid/Kaliumbromid in einer solchen Menge vorliegen, dass die in der Formmasse enthaltene molare Menge an Bromid größer oder gleich der sechsfachen molaren Menge und kleiner oder gleich der fünfzehnfachen molaren Menge des in der Formmasse enthaltenen Kupfers ist, eingesetzt wird.

10. Verfahren gemäß Anspruch 9, **dadurch gekennzeichnet, dass** es sich um Bauteile für Kühlkreisläufe handelt.

## Claims

1. Substance mixture comprising
A) from 20 to 85 parts by weight of at least one polyamide with ≥ 50 mmol/kg of terminal amino groups,
B) from 14.98 to 60 parts by weight of at least one filler and reinforcing material,
C) from 0.01 to 2 parts by weight of copper iodide/potassium bromide mixture, and
D) from 0.01 to 1.5 parts by weight of montan wax,
where the sum of the parts by weight is 100 and where the amount present of the two components of the copper iodide/potassium bromide stabilizer mixture is such that the molar amount of bromide present in the moulding composition is at least six times the molar amount and at most fifteen times the molar amount of copper present in the moulding composition.

2. Substance mixture according to Claim 1, **characterized in that**, in addition,
E) from 0.05 to 5 parts by weight of at least one other additive
is/are also used, where the total of all the parts by weight is always 100.

3. Substance mixture according to Claim 1 or 2, **characterized in that** montan wax used comprises an ester of straight-chain, saturated carboxylic acids with chain lengths of from 16 to 36 carbon atoms with ethylene glycol.

4. Use of a substance mixture according to Claims 1 to 3 for the production of polyamide-based components.

5. Use according to Claim 4, **characterized in that** the components involve moulded parts, mouldings or semifinished products which are obtained by means of injection moulding, profile extrusion or other extrusion processes, or blow moulding.

6. Use according to Claim 5, **characterized in that** the moulded parts, mouldings or semifinished products are used in the motor vehicle industry, electrical industry, electronics industry, telecommunications industry, or computer industry, in sports, in medicine, in households, in the construction industry or in the entertainment industry.

7. Use according to Claim 6, **characterized in that** the moulded parts, mouldings or semifinished products in the motor vehicle industry involve cooling-water-conducting components.

8. Use according to Claim 7, **characterized in that** the cooling-water-conducting components involve cooling-water-distribution systems, cooling-water tanks, coolant-expansion containers, thermostat housings, cooling-water pipes, heat exchangers or cooling-system connectors.

9. Method for preventing the hydrolysis and/or glycolysis of polyamide-based components, **characterized in that** production of these uses a substance mixture made of
A) from 20 to 85 parts by weight of at least one polyamide with ≥ 50 mmol/kg of terminal amino groups,
B) from 14.98 to 60 parts by weight of at least one filler and reinforcing material,
C) from 0.01 to 2 parts by weight of copper iodide/potassium bromide mixture, and
D) from 0.01 to 1.5 parts by weight of montan wax,
where the sum of the parts by weight is 100 and where the amount present of the two components of the copper iodide/potassium bromide stabilizer mixture is such that the molar amount of bromide present in the moulding composition is at least six times the molar amount and at most fifteen times the molar amount of copper present in the moulding composition.

10. Method according to Claim 9, **characterized in that** it involves components for cooling systems.

## Revendications

1. Mélange de substances contenant
A) 20 à 85 parties en poids d'au moins un polyamide présentant un nombre de groupes terminaux amino à ≥ 50 mmoles/kg,
B) 14,98 à 60 parties en poids d'au moins une charge et substance de renforcement,
C) 0,01 à 2 parties en poids de mélange iodure de cuivre/bromure de potassium, et
D) 0,01 à 1,5 partie en poids de cire de montane,
la somme des parties en poids étant égale à 100 et les deux composants du mélange stabilisateur iodure de cuivre/bromure de potassium se trouvant en une quantité telle que la quantité molaire de bromure contenue dans la masse de moulage est supérieure ou égale à six fois la quantité molaire et inférieure ou égale à quinze fois la quantité molaire du cuivre contenu dans la masse de moulage.

2. Mélange de substances selon la revendication 1, **caractérisé en ce qu'**on utilise en plus
E) 0,05 à 5 parties en poids d'au moins un autre additif
la somme de toutes les parties en poids étant égale à 100.

3. Mélange de substances selon les revendications 1 ou 2, **caractérisé en ce qu'**on utilise, comme cire de montane, un ester d'acides carboxyliques linéaires, saturés présentant des longueurs de chaîne de 16 à 36 atomes de carbone avec de l'éthylèneglycol.

4. Utilisation d'un mélange de substances selon les revendications 1 à 3 pour la production de pièces à base de polyamide.

5. Utilisation selon la revendication 4, **caractérisée en ce qu'**il s'agit, pour les pièces, de pièces moulées, de corps moulés ou de produits semi-finis qui sont obtenus par moulage par injection, extrusion, extrusion de profilés ou moulage par soufflage.

6. Utilisation selon la revendication 5, **caractérisée en ce que** des pièces moulées, les corps moulés ou les produits semi-finis sont utilisés dans l'industrie des véhicules automobiles, l'industrie électrique, l'industrie électronique, l'industrie des télécommunications, l'industrie informatique, dans le domaine du sport, de la médecine, dans le domaine domestique, dans l'industrie de la construction ou du divertissement.

7. Utilisation selon la revendication 6, **caractérisée en ce qu'**il s'agit, pour les pièces moulées, les corps moulé ou les produits semi-finis dans l'industrie des véhicules automobiles, de pièces transportant l'eau de refroidissement.

8. Utilisation selon la revendication 7, **caractérisée en ce qu'**il s'agit, pour les pièces transportant l'eau de refroidissement, de distributeurs d'eau de refroidissement, de boîtes d'eau refroidissement, de vases d'expansion de refroidisseur, de boîtiers de thermostat, de tuyaux d'eau de refroidissement, d'échangeurs thermiques ou de tubulures de raccordement de systèmes de refroidissement.

9. Procédé pour empêcher l'hydrolyse et/ou la glycolyse de pièces à base de polyamide, **caractérisé en ce qu'**on utilise pour leur préparation un mélange de substances constitué par
A) 20 à 85 parties en poids d'au moins un polyamide présentant un nombre de groupes terminaux amino à ≥ 50 mmoles/kg,
B) 14,98 à 60 parties en poids d'au moins une charge et substance de renforcement,
C) 0,01 à 2 parties en poids de mélange iodure de cuivre/bromure de potassium, et
D) 0,01 à 1,5 partie en poids de cire de montane,
la somme des parties en poids étant égale à 100 et les deux composants du mélange stabilisateur iodure de cuivre/bromure de potassium se trouvant en une quantité telle que la quantité molaire de bromure contenu dans la masse de moulage est supérieure ou égale à six fois la quantité molaire et inférieure ou égale à quinze fois la quantité molaire du cuivre contenu dans la masse de moulage.

10. Procédé selon la revendication 9, **caractérisé en ce qu'**il s'agit, pour les pièces, de circuits de refroidissement.
